# EUROPEAN PATENT SPECIFICATION

(11) **EP 3 833 540 B1**
(45) Date of publication and mention of the grant of the patent: **04.12.2024**
(21) Application number: 19752186.7
(22) Date of filing: 12.08.2019
(51) Int. Cl.: B32B 5/18, C08J 9/00, C08J 9/36, C08G 18/38, E04B 9/00, E04B 9/04, E04C 2/24, E04F 15/02

(54) **CONSTRUCTION PANEL**
ISOLIERPLATTE
PANNEAU D'ISOLATION

(30) Priority: 10.08.2018 EP 18188474; 12.01.2019 EP 19151533
(43) Date of publication of application: 16.06.2021
(73) Proprietor: HEKA graphit.technology GmbH, 18184 Roggentin (DE)
(72) Inventor: DÜWEL, Jens, 19288 Ludwigslust (DE); RÖSELER, Hennes, 18055 Rostock (DE)
(74) Representative: Reitstötter Kinzebach
(86) International application number: PCT/EP2019/071633
(87) International publication number: WO 2020/030828

(56) References cited:
- EP-A1- 1 621 564
- EP-A1- 2 940 230
- WO-A1-2014/192033
- WO-A1-2018/130699
- FR-A1- 2 870 078
- GB-A- 2 440 204
- US-A- 5 093 416

## Description

The present invention relates to construction panels with at least one thermally active layer, especially to construction panels which are provided is a support for the active layer or layers, e.g. with supports exhibiting good thermal insulation and which act also as fire barriers. The invention also relates to construction panels and panel arrangements made from these compositions as well as to methods of forming such panels and panel arrangements.

It is known that insulation panels made from polymer foams provide good thermal insulation and are widely used as building components in construction industry. For examples, foamed plastic materials are used for insulating purposes in building structures such as exterior or partition walls, bulkheads, ceilings, floors, storage tanks and roof structures. Typically, such construction panels are based on a rigid polyurethane/polyisocyanurate (PU/PIR) foam. Organic polyisocyanates and water react together with the production of polymers of which the structural units are linked together by urea linkages. A byproduct of that reaction is carbon dioxide which may cause foaming of the composition. Polyurethane and polyisocyanurate foams are known for their particularly good insulating efficiency, especially when the foam cells are predominantly closed, especially if more than 80% or more than 85% are closed cells. In certain applications, the cells contain not only carbon dioxide, which is produced by the reaction of the isocyanate with the chemical blowing agent (for instance, water), but also a physical blowing agent such as one of the hydrocarbon, hydrofluorocarbon, or hyrochlorofluorocarbon agents which can be employed in the manufacturing process. Such panels are commercially available in various sizes and can be joined together to larger panel arrangements, often by sealing the lateral joints between the pals with flexible foam gaskets.

The PU/PIR foams are typically combustible but leave little carbonaceous residues on burning. However, such panels have only limited structural integrity under fire conditions. In order to increase the structural integrity to prolong building stability and to maintain barriers to the passage of heat, smoke and fire, such panels are usually made with a polymer foam core provided with external metal layers, for instance of steel or aluminum.

It is also known to increase the performance of insulating panels by incorporating flame retardant additives in the foam and/or by using thick external layers made from an incombustible material such as gypsum.

Recent fire disasters such as the Grenfell tower fire in June 2017 in London have shown that in the case of a fire, buildings provided cladding/insulation material made from combustible polymers pose a dramatically increased risks for the lives their inhabitants.

Therefore, there is a need for improved construction materials on a polymer basis which allow the manufacturing of construction panels which are much less prone to risks in case of fire.

It is also known that wall or floor elements can be provided with electrical resistive heating elements to provide for room heating. The known elements are rather costly and exhibit a poor efficiency with respect to the power consumption required to achieve a comfortable room climate.

International patent application WO 2018/130699 A1 describes a construction material where the dry material comprises 10 - 98 wt.% carbon, 2-70 wt.% binder, and 1 - 80 wt.% loose particles which are at least partially which are partially coated with an electrically conductive material. This construction material exhibits improved absorption characteristics for high-frequency electromagnetic radiation and can be used in surface heating systems.

Moreover, it is observed that the effects of men-made climate change tend to increase the daily temperatures during summer worldwide, there is not only a need to effectively heat but also cool houses and rooms inhabited by people.

These technical problems are solved by the construction panel according to the present invention. Accordingly, the present invention concerns a construction panel as defined in claim 1. The constriction panel comprises at least one insulation layer, at least one active thermal layer, said active thermal layer comprising at least an electrical heating element and/or an electrical cooling element, and connector means for connecting said at least one active thermal layer to a source of electrical current.

It has surprisingly been found that the insulation panel of the present invention which comprises an insulation layer with at least one active thermal layer allows to provide a large variety of heating and/or cooling panels which are both cost-effective regarding their manufacturing costs and efficient regarding their energy consumption.

An active thermal layer in the sense of the present invention is a layer which can assume a different temperature than its environment by introduction of electrical energy which is converted into a heated or cooled surface of the thermal layer. In addition, the insulation panel of the present invention may be provided with an appropriate structure for circulating a thermal medium, for instance a cooling or heating fluid such as water or air through structures of the thermal layer, such as tubes.

The term "connector means" is to be understood broadly and comprises any type of connection between an external or internal source of electrical current and the active thermal layer such as electrically conductive wires, sheets, releasable or non-releasable connector elements, etc. Any type of source of electrical current can be employed with the insulation panel of the present invention, such as a power grid, batteries, solar power, wind or water power.

The term "insulation panel" has also to be construed broadly referring to electrical insulation or thermal insulation or both. The insulation layer comprises an electrically insulating sheet, web or paper, especially wall paper. Preferably, however, the insulation layer comprises a thermally insulating layer, especially a layer which exhibits reduced risks when exposed to fire.

In a preferred embodiment, the insulation layer uses two-phase polyurea silicate systems (PUS) for the construction of construction panels acting as insulation panels.

In one embodiment, the construction panel of the present invention comprises at least one insulation layer comprising a foam made from a foaming first siliceous-based polyurea composition obtained by reacting ingredients comprising a polyisocyanate and an aqueous silicate, and a stabilizing material.

Two-phase polyurea silicate systems (PUS) are known in the art. By variation of the nature and relative proportions of the reactants and the reaction conditions, solid products of differing physical characteristics maybe obtained. For example, one may obtain a reaction product having the consistency of a putty, or alternatively a hard dense mass or, yet again, a low density cellular structure or a product in any physical state between the foregoing states. The mixing ratio of the organic and inorganic components can determine which liquid forms the continuous phase.

Such construction materials are commercialized for instance by BASF SE, Germany, under the brand name "MasterRoc^{®}". These siliceous-based polyurea compositions are usually obtained by reacting ingredients comprising a polyisocyanate and an aqueous silicate. The reaction ingredients can further comprise a polyol and/or inert fillers.

It is known that the foam characteristics of the resulting insulation material can be varied by the amount of aqueous silicates used in the composition. If high amounts of aqueous silicates are used, all of the carbon dioxide generated from the reaction of polyisocyanate with water tends to be used up by the silicate component for hydrated silica precipitation and the reaction mixture will thus not foam. A typical non-foaming two-component polyurea silicate resin is commercialized by BASF SE under the trade name "MasterRoc^{®} MP 368". On the other hand, when small amounts of aqueous silicates are used, lightweight foam materials are obtained. Such foaming compositions are commercialized by BASF SE under the trade name "MasterRoc^{®} MP 367". These compositions are used for ground consolidation, especially void and cavity filling and consolidation of rocks in underground structures such as tunnels or coal mines. It has surprisingly been found that improved insulation panels can be manufactured from these materials.

The panel structures obtained by the non-foaming composition are generally more rigid than the panel structures obtained by the foaming material. Therefore, in a preferred embodiment, the non-foaming two-component polyurea silicate resin can act as a stabilizing material within the layer obtained from the foaming material. Accordingly, in a preferred embodiment, the stabilizing material of the construction panel according to the invention comprises a resin obtained from a non-foaming second siliceous-based polyurea compositions obtained by reacting ingredients comprising a polyisocyanate and an aqueous silicate, wherein said non-foaming second siliceous-based polyurea has a higher concentration of said aqueous silicate than said foaming first siliceous-based polyurea composition.

In a preferred embodiment, the construction panel of the present invention is made as a composite material from a foaming polyurea silicate resin, such as MasterRoc^{®} MP 367, and a non-foaming polyurea silicate resin such as MasterRoc^{®} MP 368. Preferably, the foaming polyurea silicate resin forms a core region of the construction panel while regions made of non-foaming polyurea silicate resin form reinforcement structures or attachment points of the construction panel. Therefore, the non-foaming polyurea silicate resin preferably forms edge regions of the construction panel, for example, edge regions which are configured in a tongue and groove configuration to allow assembly of construction panels of the invention to larger panel arrangements. In other embodiments, the non-foaming polyurea silicate resin is arranged like a skeleton-structure within the polyurea silicate foam.

The polyisocyanate according to the present invention is an aliphatic isocyanate, an aromatic isocyanate or a combined aliphatic/aromatic isocyanate, having an -NCO functionality of preferably > 2. Suitable polyisocyanates include tetramethylene diisocyanate, hexamethylene diisocyanate (HMDI), dodecamethylene diisocyanate, 3-isocyanatomethyl-3,5,5-trimethyl- cyclohexyl isocyanate, i.e. isophorone diisocyanate (IPDI), 4,4'-dicyclohexylmethane diisocyanate (H12MDI), 1 ,4-cyclohexane diisocyanate (CHDI), 4,4'-diisocyanatodicyclo- hexyl-2,2-propane, p-phenylene diisocyanate, 2,4- and 2,6-toluene diisocyanate (TDI) or mixtures thereof, tolidine diisocyanate, 2,2'-, 2,4'- and 4,4'- diphenylmethane diisocyanate (MDI) or mixtures thereof, 1 ,2-naphthylene diisocyanate, xylylene diisocyanate, tetramethylxylene diisocyanate (TMXDI), and mixtures thereof. Diphenylmethane diisocyanate (MDI) or polymeric diphenylmethane diisocyanate (PMDI) and mixtures thereof are particularly preferred.

The commercially available aqueous alkali metal silicates have been found to give satisfactory results. Such silicates can be represented as M₂O.SiO₂, where M represents an atom of an alkali metal and they differ in the ratio of M₂O:SiO₂. It has been found that the sodium silicates are highly satisfactory and while the other alkali metal silicates, e.g. potassium and lithium silicates may be used they are less preferable on economic grounds. Using the preferred sodium silicate, the M₂O:SiO₂ratio may vary, for example from 1.6:1.0 to 3.3:1.0. However it is found generally to be preferable to employ a silicate of which the said ratio is within the range 20:10 to 2.3:1.0.

In addition to or alternative to the non-foaming polyurea silicate resin, other stabilizing materials can be integrated within the layer of polyurea silicate resin foam which will be described in more detailed below.

In an alternative embodiment of the invention, the insulating layer of the construction panel of the invention can be made from a different material than the material described in the embodiments described above. Accordingly, in one embodiment, the construction panel comprises at least one insulation layer comprising a rigid foam made from a polystyrene composition and a stabilizing material.

In both embodiments, the stabilizing material comprises two-dimensional or three-dimensional fabrics made of glass, carbon, basalt and aramid fibers. Such fabrics are, for instance, commercialized under the tradename SITgrid^{®} by company "V.FRAAS Solutions in Textile GmbH", Helmbrechts, Germany. The two-dimensional or three-dimensional fabrics can have a grid arrangement with mesh widths in the range of 3 millimeters to a couple of centimeters.

Known three-dimensional fabrics suffer, however, from the drawback that the panels have to maintain an essentially flat configuration. In many applications, for instance concerning insulation panels for trains or busses, the panels have to attain a curved configuration. Thus, according to the present invention, construction panels can be employed which achieve a curved configuration by using a three-dimensional stabilizing material obtained from two two-dimensional fabrics made of glass, carbon, basalt and aramid fibers, spaced apparat by patches of non-foaming polyurea silicate resin. These three-dimensional stabilizing materials can easily be arranged in complex curved configurations. The final configuration is then foamed with a foaming polyurea silicate resin thus obtaining the final insulation panel. The foamed stabilizing material can be point-like fixing dots connecting adjacent two-dimensional layers in order to obtain a three-dimensional configuration. Alternatively, the fixing dots can be made from a silicate material which provides improved heat resistance to the three-dimensional structure. With these kinds of three-dimensional structures, the panels of the invention can be obtained by firstly configuring the two-dimensional structures into the desired shape using spacers between them, then applying the foamed fixing dots to obtain the final stabilized three-dimensional structure. Afterwards, the spacers can be removed or left within the structure, as desired. Finally, the structure is filled with the foaming siliceous-based polyurea composition. Typically one surface of the structure will be provided with said at least one active heating layer and/or cooling layer and the other, or both surfaces can obtain a final surface finish. Such panel having complex three-dimensional configuration can successfully be employed as inner linings in the passenger cabin of vehicles or planes.

By suitably configuring the materials, diameters, densities and crossing angles, etc. of warp and weft threads, the mechanical properties of the two-dimensional fabrics can be adjusted as desired, e.g. in terms of elasticity, compressive and tensile strength.

Other preferred stabilizing materials include endless glass fabrics obtained by felting an endless glass fabric thread into a pillow-like form which is then filled with the foam of the present invention to create high-strength planar structures. Structural stability can also be improved by incorporating glass fibers or basalt rods. In other embodiments, metallic profiles, such as aluminium profiles, can also be included in the construction panel.

The filler materials may be organic or inorganic, fibrous or particulate, or mixtures of any of these, such as sand, alumina, aluminosilicates, magnesia, and other particulate refractories; metal fibers, asbestos, glass fiber, rock wool, aluminosilicate, calcium silicate fibers and other fibrous refractories; wood flour, coke and other organic or carbonaceous particles; paper pulp, cotton waste, cotton, jute, sisal, hemp, flax, rayon, or synthetic fibers such as polyester, polyamide and acrylonitrile fibers and other organic fibrous materials. In a preferred embodiment, the insulation material further comprises a filler material, for instance, an inorganic filler material such as glass microbeads. The filler material does not only increase structural stability but also provides for an increased thermal insulation capability. The filler material can comprise microspheres in different sizes and can also comprise solid or hollow microspheres. In other embodiments, the filler material comprises inorganic granules and/or fibers, for instance, made from silicon dioxide. For instance, commercially available silicon dioxide granules, usually commercialized as "cat litter", can also be included.

In other embodiments, the stabilizing materials comprise three-dimensional fabrics arranged on one or both sides (e.g. planar faces) of the insulation layer. The three-dimensional fabrics are preferably made from an inorganic material or from a carbon material, for instance from a ceramic material or from glass, carbon, basalt and aramid fibers.

According to the invention, the electrical heating and/or cooling element comprises one or more electrically conductive layers such as metal sheets or metal meshes, e.g. silver of copper sheets or meshes.

In one embodiment, electrically conductive layers of the construction panel comprise one or more layers made from a two-dimensional semi-conductor. For instance graphene layers or graphite/graphene layers can be used to establish a two-dimensional semi-conductor layer.

The electrically conductive layers comprise one or more layers of an electrically conductive particulate material (powder, fiber or granules), namely graphite, dispersed in a binder, preferably an acrylate binder, comprising from 30 to 86 % by weight graphite and from, 4 to 30 % by weight binder and from 10 to 40 % by weight functional additives. Suitable compositions are described in detail in applicant's international patent application WO 2016/087673 A1. By suitable adjusting the ratio of conductive particulate material to binder, the electrical, thermal and radiation absorbing/reflection properties of the layer can be varied.

In a preferred embodiment, said electrically conductive layers comprise printed patterns, for instance obtained by screen printing. Using printing technology, complex patterns for distributing current within an active thermal layer can easily be obtained. Thus heating or cooling regions of a panel can be optimized.

Suitable additives may then include artificial thickeners such as Rehovis AS 1180 or Rheovis AS 1125 (BASF, Germany) designed to bind water and make the printing paint viscous to prevent it from passing through the screen fabric. These thickeners are particularly suitable for acrylate-based applications. Other additives include salts such as EFKA IO 6785 or EFKA IO 6783 (BASF, Germany) to adjust electrical conductivity. Rheology modifies such as Sterocoll BL (BASF, Germany) can be used to optimize viscosity properties. Surfactants such as Disponil FES 77 (BASF, Germany) can be used to improve shear stability and to achieve improvements in water separation during squeegee application. The additives mentioned herein are only of indicative nature and the skilled person will find various alternatives to improve for instance the conductive paint for the manufacturing process desired. The compositions can also be based on a silicate/mineral basis. Solvent-containing or multi-component formulations are also possible, e.g. UV-curing formulations.

According to one embodiment of the present invention, any of the layers comprised in the construction panel, especially the insulation layer and/or the active thermal layer can comprise bonding enhancers which increase the bonding between the layers, and/or the bonding/adhesiveness between the construction panel and any underlying substrate. In a preferred embodiment, the bonding enhancers comprise crystals of zinc oxide, preferably zinc oxide crystals having four arms, i.e. exhibiting a tetrapod structure, as described, for instance, in international patent application WO 2011/116751 A2. Such tetrapod-crystals increase the long-term adhesive properties of the active thermal layer. Moreover, the mechanical properties of the layer are improved allowing to reduce binder content thus improving electrical conductivity of the active thermal layer which, in turn, reduces power consumption of the contruction panel. Moreover, flexibility of the layers and overall flexibility of the panel are improved. Thus, the panels can be transported, handled and worked more easily without the risk of damage or destruction. It is also possible to employ zinc oxide tetrapods, which are at least partially covered with an electrically conductive material, especially graphene, thus further reducing the electrical resistance of the layer.

In one embodiment, the electrical heating and/or cooling element is arranged in a layered structure forming a Peltier element which can, for instance be obtained by sandwiching said layer of an electrically conductive particulate material between two metal plates or foils or between two carbon sheets or foils or between a metal plate or foil or a carbon plate or foil. The external metal plate or foil represents the active thermal surface which, depending on current polarity, is cooled or heated, while the inner metal plate or foil attached to the insulation layer represents the heat exchange surface where heat has to be removed or provided via suitable heating or cooling media.

When Peltier elements are used, the panel should be provided with the following layers: The insulating panel is provided with a first insulating layer made from aluminium oxide. On the aluminium oxide layer, an electrically conductive layer is applied, for instance made from a metal mesh. Subsequently, a layer (for instance a 2 mm thick layer) of electrically/thermally conductive filler/plaster material is applied which is configured to exhibit the characteristics of a semi-conductor. A subsequent electrically conductive layer can be again made from a metal mesh. Finally, an external layer of aluminium oxide is provided.

In certain embodiments, modified construction panels can comprise water cooling, e.g., a system for water circulation and/or Peltier-elements. In a simple embodiment, the panel comprises grooves, for instance in a meandering pattern, allowing to insert PVC pipe elements. To obtain a high heat transfer rate, the pipe elements can be covered with a thermally conductive material such as a thermoconductive filler. Thus, the active thermal layer can comprises tubes for a cooling fluid arranged in grooves provided on a surface of said at least one insulation layer and a thermally conductive plate arranged on said grooves, the thermally conductive plate being in thermal contact with said tubes.

In a preferred embodiment of the present invention, the construction panels are provided with a tapering edge allowing abutting edges of neighboring panels to be filled and leveled with a suitable plaster or filler material. Moreover, to increase structural stability, a stabilizing tissue material can be incorporated in the area of abutting edges.

Accordingly, in one embodiment, the insulating panels of the present invention can be provided with an electrically conductive layer and suitable electrical contacts for passing an electrical current through the electrically conductive layer.

Cables, metal meshes or metal forms can be incorporated, for instance in form of strips, in corresponding cavities provided in the construction panel.

The construction panel can also include additional equipment such as temperature sensors, safety switches, for instance, bi-metallic safety switches, and corresponding cables.

Once all elements are integrated, a conductive layer is applied. This can either consist of a modified electrically conductive plastering or filling material which will subsequently be dried. Alternatively, other formulations such as UV-durable binders, e.g., based on palm oil or polyaniline can be employed. For instance, a palm oil-based polyester binder can be synthesized and blended with polyaniline and formulated with maleic acid to obtain a UV-durable binder. Such an electrically conductive layer represents a heating surface of the construction panel.

The panel can finally be provided with a plaster/filling layer, for instance consisting of a gypsum/cement layer. The heating layer can include materials having a high heat conductivity, for instance, aluminum oxide or borosilicate, or the like.

Panels can also comprise integrated cameras, e.g. for face recognition, or voice recognition sensors, or sensors to sense mobile phones, smart phones, RFID-chips, etc. allowing to identify a user to create systems for personalized heating/cooling and to adapted heating and/or cooling condition to personalized user profiles.

In electrical vehicles, the construction panel of the present invention can, for instance, be used for internal linings as radiant heaters avoiding conventional ventilation heating.

The panel can be obtained by using a suitable mold, inserting the components for increasing structural stability into the mold and pressing an appropriate amount of foam material into the mold and allowing the foam to solidify. Suitable molds are, e.g., available from Henneke Formbau, 58849 Herscheid, Germany.

The inner form of the mold can be provided with various grooves and ribs for structuring the construction panel, allowing, for instance, to define areas for cable management, measuring points, introduction of surface meshes or electrically conducting plaster or filler, etc.

The thermal conductivity of the insulation layer of the panel of the invention is typically in the range of λ = 0.012 to 0.024 W m⁻¹ K⁻¹ at room temperature. The bulk density is in the range of 100 g/l to 400 g/l. In the upper range of the bulk density, the insulation has an almost wood-like strength.

The thermal efficiency of the active heating layer is typically better than 80 W m⁻² in order to achieve a surface temperature of 40 °C using, e.g. layer comprising carbon powder (lower value signifies better efficiency). Using a web made of carbon fibers, a thermal efficiency of 9 W m⁻² or better can be achieved. E.g. a textile fabric is available which is based on polyester fabric as a matrix and comprises carbon fibers as heating elements. Silver plated fibers can be employed to distribute electrical current along the (e.g. vertical) edges of the heating panel. Even better efficiencies can be achieved using carbon-based layer which comprise graphene.

Typically, active thermal heating layers can be quite thin, e.g. having a thickness of 1 mm to 5 mm, typically 2 mm.

The insulation layer of the panel of the invention exhibits improved refractory properties. For instance an insulation layer having a thickness of 20 mm and a bulk density of 200 g/l can be exposed to a burner heating on surface to more than 1200 °C for more than 2 minutes. The heated surface exhibits no damage while the opposite surface reached at most hand-warm temperatures.

The construction panel of the present invention can preferably be used for wall, sealing and floor heating.

Electrical power is preferably supplied by direct or alternating current, preferably at protective low voltages.

In one embodiment, the panel is capillary-active and the active thermal layer is applied directly or after prior application of a support layer onto the insulation layer.

In one embodiment, the insulation layer can comprise calcium silicate panels, which can, for instance, be employed in wet rooms, such as bathrooms. While capillary activity is a property of, for instance, calcium silicate boards, using large tiles (indicatively 3 m x 1 m) which are printed from the backside, the resulting panels are essentially steam-tight.

When the insulation layer is a thermally insulating layer, the efficiency of conversion of electrical energy to usable room heating/cooling can be maximized.

In one embodiment, the active thermal layer generates surfaces temperatures of up to approximately 50 °C allowing to heat a room in which the panels are installed via emitted infrared radiation. Generally, convective heating will also be employed.

Preferably, the individual heating/cooling panels will be controlled separately, allowing different temperature environments to be created within a given room.

Typically, the heating/cooling elements will exhibit a constant current supply during operation. Different heating/cooling output from panel to panel can be achieved by employing pulsed current supply using different pulse rates or pulse width. The differentiated pulsation of the individual heating/cooling panels can be controlled by an individual definition of the maximum and minimum surface temperatures of the active thermal layer which can, for instance, be measured by an integrated temperature sensor. The room temperature can be controlled by a room thermostat which measures the total temperature of the room and which provides data for the control unit of the entire system.

The active thermal layer and/or the electrically conductive layer comprises carbon nanotubes, for instance, nanotubes having a diameter of approximately 5 nm and a length of approximately 10 µm, in a typical concentration of 10 percent by weight referred to the total solid compositions of the layer. Such carbon nanotubes can be employed to provide for a more homogeneous thermal conductivity and/or electrical conductivity within the layer thus decreasing the risk of hot spots during operation. Suitable nanotubes are commercialized under the tradename TUBALL^{™} MATRIX 302 (OCSiAl EUROPE, Luxembourg), which is a conductive additive created comprising graphene nanotubes designed for applications where electrical conductivity is required. These nanotubes form sort of "braid" which also encloses other pigments such as graphite and thus ensures a more even distribution of the current flow and thus better heating characteristics.

The active thermal layer or layers are manufactured using printing techniques, for instance screen-printing techniques. As the overall geometry of an active thermal layer has a large influence on its heating power and, consequently, on its power consumption, printing techniques can be employed to easily optimized the geometry of an active thermal layer according to specific requirements.

For instance, a more densely packed geometrical structure of the active thermal layer (extreme case: full-solid surface) results in higher heat output but also higher energy consumption. Generally, the heating power (W/m²) depends on the specific electrical resistance (Ω/m²). Accordingly, a more open/thinner geometry (high electrical resistance) results in a lower specific heating output, while a denser and thicker geometry (less electrical resistance) results in a higher specific heating power.

This general concept can be used to combine more than one active thermal layer in a construction plate of the invention. If more than one thermal layer is employed, the thermal/heating or cooling properties of the layers can differ from each other. By combining several layers, the construction plate can be adapted to different requirements. For instance, a dense booster layer can ensure rapid heating while strip-type layers can serve to maintain a given temperature in an energy-saving manner. Accordingly, in one embodiment, a construction panel having more than one active thermal layer is also employed with control means to independently provide electrical energy to each active thermal layer allowing operation of each layer at different, or if desired similar times. The individual characteristics of the separate layers can be used for individualization thus using the heating cells in various combinations.

The inventors have also observed that different coatings on the construction panel of the invention can have large influences on the heat-conducting properties of the panel, reducing or increasing heating power and energy efficiency. It is preferred that a coating comprises aluminium oxide which exhibits on the one hand high heat conductivity while still maintaining electrical insulation of the active thermal layers.

The invention will now be described in more detail making reference to certain preferred embodiments described in the accompanying drawings.

In the drawings:
- Fig. 1: shows a schematic first embodiment of the construction panel of the present invention, comprising a heating layer;
- Fig. 2: shows various embodiments of the edge geometry of the construction panels of the present invention allowing to join several construction panels together to large arrangements;
- Fig. 3: shows an alternative embodiment for joining construction panels of the present invention;
- Fig. 4: shows a further embodiment of the construction panel of the present invention;
- Fig. 5: shows a cross-sectional view of an construction panel of the present invention, where the active heating layer is configured as a Peltier-element;
- Fig. 6: shows a schematic manufacturing process of a heating cell of an active thermal layer; and
- Fig. 7: shows various embodiments of geometries of heating cells of active thermal layers.

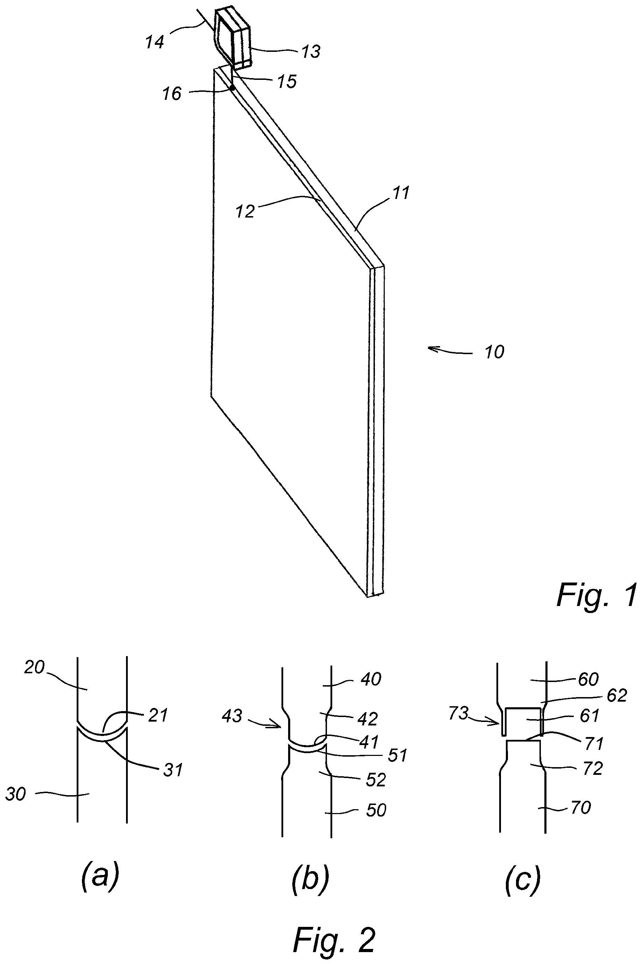

The construction panel 10 shown in Fig. 1 comprises an insulation layer 11 made from forming a silicious-based polyurea composition by reacting polyisocyanide components with aqueous silicate components. In the present example, the insulation layer is approximately 2 cm thick. In order to obtain a heatable panel, the insulation layer 11 is coated with an active thermal layer 12, which in the present case is obtained by coating a 2 mm thick layer of a particulate graphite material dispersed in an acrylate binder onto the insulation layer. A heating effect is generated by passing electrical current through the active thermal layer. To this effect, a control element 13 is provided, which receives current via a power line 14 from a (non-depicted) power source and is electrically connected to the active thermal layer 12 via cable 15 attached to connector means such as an electrical contact 16 to deliver a pre-selected amount of current to the active thermal layer 12. The resistance of the active thermal layer is governed by the concentration of the electrically conductive ingredient, in this the particulate graphite material. The resulting resistance determines the amount of electrical energy injected, which is converted into thermal heat. In order to complete the electrical circuit, a (non-depicted) return line to the ground or to the power source has also to be provided. In other embodiments, the construction panel comprises electrical contacts arranged on one or more of its edges to pass a current to neighboring construction panels.

Usually, several construction panels will be combined into a larger arrangement. Fig. 2 shows in Figures 2a, 2b and 2c various embodiments of suitable edge geometry allowing neighboring panels to be assembled together. In Fig. 2a, two adjacent construction panels 20, 30 are provided with convexly rounded edges 21 and concavely rounded edges 31, respectively. Fig. 2b shows a similar arrangement as Fig. 2a, wherein the neighboring panels 40, 50 are provided with convexly rounded edges 41 and concavely rounded edges 51, but are further provided with tapering edges regions 42, 52, so that recesses 43, 53 are formed at the abutting area of neighboring construction panels 40, 50. These recesses 43, 53 can be filled with a suitable plaster or filler material, which will usually be applied to level with the external planar surfaces of the panels 40, 50. Fig. 2c shows a typical tongue-end groove arrangement, where one edge of an construction panel 60 is provided with a groove 61 and the other construction panel 70 with a tongue 71. Upon assembly, the tongue 71 fits into the groove 61 provided at the edge of the neighboring construction panels 60, 70. Similar to the embodiments of Figures 2a and 2b, the embodiment of Fig. 2c can be provided with tapering edges 62, 72 to form a recess 63, 73 (as shown) or with non-tapering edges (not shown).

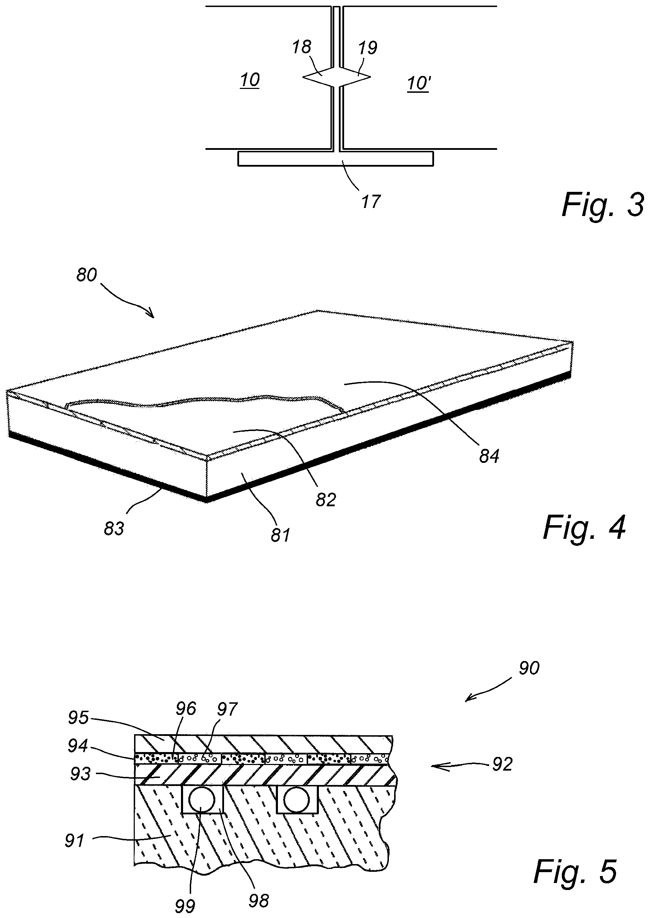

Fig. 3 shows an alternative embodiment for joining construction panels of the present invention. In this embodiment, two construction panels 10, 10' are joint using a plastic T-shaped connector 17 having two spikes 18, 19 which can be inserted into the respective panels 10, 10'. As a matter of course, other connectors can easily be envisioned. For instance, connectors can be employed which comprise metallic elements for establishing an electrical connection between adjacent panels.

Fig. 4 shows a further alternative embodiment of the construction panel 10 depicted in Fig. 1. In the embodiment of Fig. 4, the construction panel 80 also provided with a an insulation layer 81, one side of which is coated with a thermally active layer 82. Further, on the opposite side of the insulation layer 81, a backing layer 83 is arranged which does not only provide additional structural stability to panel 10 can also be used to mounting purposes and the like. The backing layer can be made from any suitably rigid plastic, metal or ceramic material and can assume any configuration such as plates, grids, etc. The front surface of the construction panel 80 is covered with a finish 84 such as a rendering base/plaster base on which, for instance, suitable mineral plasters or fillers can be applied. The surface finish can comprise ornamental elements such as thin wood panels, which can be attached to the construction panel, e.g., by means of a thermally conductive adhesive or a suitable clipping system.

Fig. 5 depicts an embodiment of the present invention, in which the insolation panel 90 is provided with a thermoelectric cooler/heater layer 92 which is applied onto the insulation layer 91. It is known that electrical cooling/heating effects can be obtained by arranging p- and n-type semiconductors between two metal plates, using the Peltier-effect to create a heat flux between the junctions of the two different types of semiconductor materials. When passing current through a thermoelectric cooler, heat is transferred from one side of the sandwich-structure to the other, depending on the polarity of the applied electrical current. In the context of the present invention, the thermoelectric cooler/heater (i.e. Peltier-element) consists of a metallic internal layer 93, arranged directly or via intermediate layers on the insulation layer 91, a graphite-/graphene-based interlayer layer 94, which exhibits semiconductor properties, and an external metallic layer 95, which provides the external, thermally active surface of the heating/cooling element.

The graphite-/graphene-based interlayer layer 94 is structured into alternating regions 96, 97 exhibiting n-type and p-type semiconductor characteristics, respectively. This can be achieved by suitably selecting the conductive particulate material, the binder material and optionally included dopants. In Fig. 5, n-type regions 96 are symbolized by closed-circle particulates and p-type regions 97 are symbolized by open-circle particulates.

When acting as a cooling element, heat transferred to the inner metallic layer 93 must be removed, so that it is preferred that a suitable cooling circuit is provided. To this effect, grooves 98 are provided on the upper surface of the insulation layer 91, in which cooling tubes 99 in which a suitable cooling medium, such as water, can be circulated. The cooling tubes are in thermal contact with the inner surface of the inner metallic layer 93. Alternatively, passive or forced air cooling can be employed.

Likewise, under opposite different electrical polarity, heat may be supplied to via tubes 99 the inner metallic layer 93 which is cooled when the outer metallic layer 95 acts as a heating element.

Construction panels according to the invention can also be made from combinations of Betol K 42 T (inorganic binder based on an aqueous solution of potassium silicate commercialized by Wöllner GmbH, Ludwigshafen, Germany) and Master Roc 367 Foam Part B (BASF). Other suitable compositions include Betol K 5020 T (Woellner) and Master Roc 367 Foam Part B.

However other compositions than Master Roc compositions can also be used. For instance, panels have been made from a mixture of Betol K5020T , water glass as binder, with the addition of Fabutit 748 (Chemische Fabrik Budenheim KG, Buddenheim, Germany) as hardener and Warofoam 720 (Wöllner) as defoamer. Hollow spheres (Poraver) were used as filling material. In all variants 3-D-fabric (Fraas) was used. In order to further stiffen this fabric, bars of basalt were additionally inserted into the fabric. These allow a higher stiffness of easily manageable panels having a length of 2.7m.

Moreover, a mixture of hollow spheres, cement, water and Contopp foaming agent SFS 3 could also be used to produce a construction panels comprising a 3-D fabric and basalt rods.

Fabric having for instance a power consumption as low as 5 W to yield a temperature of 40 °C can be used.

Additional applications of the construction panels can be contemplated: For instance, as free-hanging panels, spheres, cubes, oval tubes or in other forms, free-hanging "radiators" can also be used to significantly improve room acoustics thanks to their outstanding acoustic properties. The heating surface can be applied on all sides, including the interior of the tubes or other hollow forms. Through the additional use of ionization modules, such hollow forms can also achieve health benefits. Illumination means can also be incorporated.

The construction panels of the invention can be employed as office partition walls. They have excellent acoustic properties and are able to heat the working areas more directly, thus saving energy. Shielding properties against electromagnetic radiation can also be incorporated.

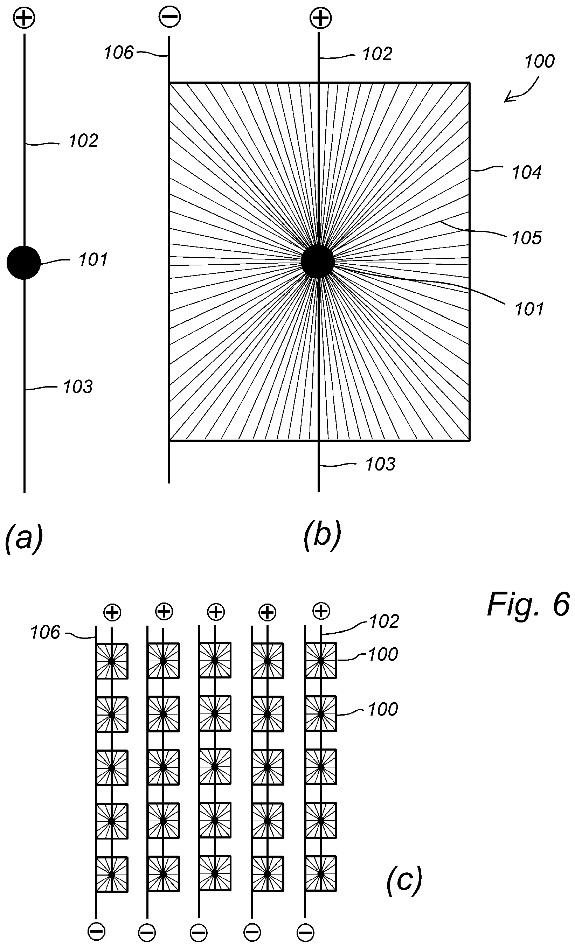

In a preferred embodiment of the present invention, an active thermal layer of the construction panel of the invention comprises a multiplicity of heating cells which may be operated jointly, in sub-groups or even individually depending on the complexity of the wiring and control circuitry involved. Figure 6 shows a schematic manufacturing process of such heating cells 100 by printing an electrically conductive structure made from a material which exhibits a certain resistivity to convert electrical current into heat. In printing step 1 shown in Figure 6a, a positive pole 101 and its supply wiring 102 are printed on an electrically insulating substrate. Also, a connection wire 103 for connecting cell 100 with neighboring cells is shown. In the second step, an electrical isolation (not shown) is printed over the supply and connection wiring not covering the positive pole itself. Onto the insulating layer supplied in step 2, a negative pole 104 (having a rectangular configuration in the example of Figure 6) and heating filaments 105 connecting the positive pole 101 and the negative pole 104 are printed resulting in the configuration shown in Figure 6b. The negative poles 104 are connected via a a negative supply line 106 to the current source. Figure 6c shows how a plurality of individual cells 100 are arranged within an active thermal layer. In this example, the cells within one column are operated jointly but individual columns could be operated separately if desired. The heating cells themselves can have any configuration, such as round, or polygonal. The number of printing steps can exceed three if more complex arrangements and more granular control is desired.

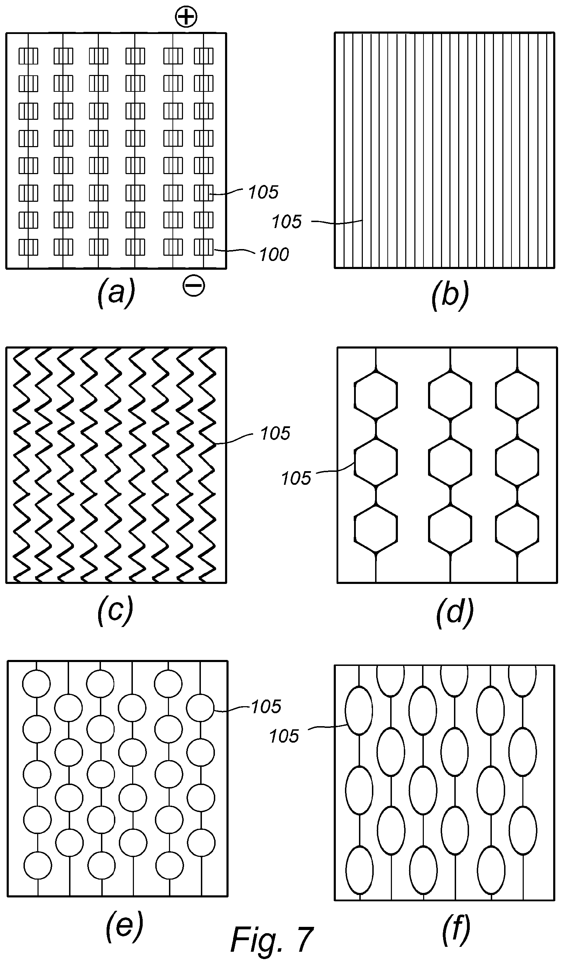

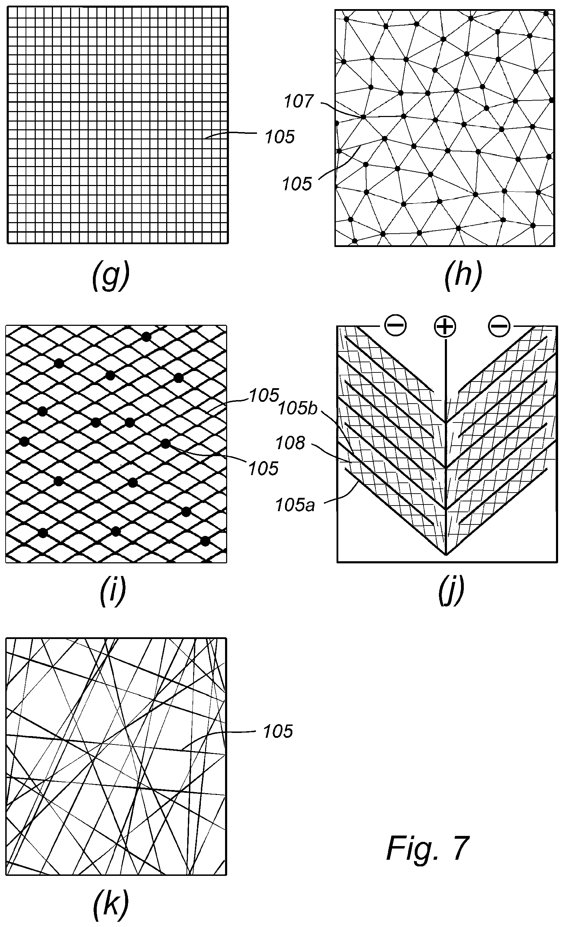

Figure 7 shows a variety of active thermal layers made up of different heating cell designs. In Figure 7a, the active thermal layer consists of a plurality of square-type heating cells 100, each heating cell comprising a plurality of linear heating filaments 105. Figure 7b shows an active thermal layer comprising a plurality of linear heating stripes/filaments 105 while Figure 7c shows a plurality of zic-zac heating stripes/filaments 105. Figures 7d, e and f show polygonal (specifically hexagonal), circular and elliptical heating filaments 105, respectively. Figures 7g and 7h show a simple rectangular grid structure and a triangular grid structure of heating filaments 105 without heating knots (Fig. 7g) and with heating nodes 107 (Fig. 7h), respectively. The heating nodes 107 are thickened crossings of heating filaments 105 allowing to generate more heat at specific locations. Figure 7i shows a rhombic pattern of the heating filaments 105. In this example, heating nodes 107 are not provides at every crossing of filaments but at specific location intended to obtain a pre-designed heating pattern. Figure 7j shows a fishbone pattern of heating filaments. In this example, the heating filaments are divided into heating filaments 105a connected to the positive pole and heating filaments 105b connected to the negative pole. Electrical continuity between the filaments is established via patches of conductive layer material 108, for instance layer material based on conductive carbon compounds such as grahite, graphene and combinations thereof. Finally, Figure 7k shows a chaotic pattern of the heating filaments 105.

It is noted that the geometry of the filaments can be adapted such that there is a denser packing of the filaments near the border of the active thermal layer to provide an improved current flow. Moreover, any of the depicted patterns can be arranged in a monolayer or multilayer configuration.

## Claims

1. Construction panel (10,80,90) comprising
at least one insulation layer (11,81,91), said at least one insulation layer comprising an electrically insulating sheet, web or paper,
at least one active thermal layer (12,82,92) manufactured using printing techniques, said active thermal layer comprising at least an electrical heating and/or an electrical cooling element, wherein said electrical heating and/or cooling element comprises one or more electrically conductive layers, said electrically conductive layers comprising one or more layers of graphite dispersed in a binder, comprising from 30 to 86% by weight graphite and from, 4 to 30% by weight binder and from 10 to 40% by weight functional additives, wherein said functional additives comprise 10% by weight carbon nanotubes; and
connector means (16) for connecting said at least one active thermal layer (12,82,92) to a source of electrical current.

2. Construction panel according to claim 1, wherein said at least one insulation layer (11,81,91) comprises a foam made from a foaming first siliceous-based polyurea composition obtained by reacting ingredients comprising a polyisocyanate and an aqueous silicate, and a stabilizing material

3. Construction panel according to claim 2, wherein said stabilizing material comprises a resin obtained from a non-foaming second siliceous-based polyurea compositions obtained by reacting ingredients comprising a polyisocyanate and an aqueous silicate, wherein said non-foaming second siliceous-based polyurea has a higher concentration of said aqueous silicate than said foaming first siliceous-based polyurea composition.

4. Construction panel according to claim 1, wherein said at least one insulation layer (11,81,91) comprises a rigid foam made from a polystyrene composition and a stabilizing material.

5. Construction panel according to one of claims 1 to 4, wherein said stabilizing material comprises two-dimensional or three-dimensional fabrics made of glass, carbon, basalt and aramid fibers.

6. Construction panel according to one of claims 1 to 5, wherein said at least one insulation layer (11,81,91) comprises an inorganic filler material.

7. Construction panel according to claim 6, wherein said inorganic filler material is selected from one or more of silicon-dioxide mircosheres, granules or fibers.

8. Construction panel according to one of claims 1 to 7, wherein said electrically conductive layers comprise one or more layers made from a metal sheet or metal mesh.

9. Construction panel according to one of claims 1 to 8, wherein said electrically conductive layers comprise one or more layers made from a two-dimensional semi-conductor.

10. Construction panel according to one of claims 1 to 9, wherein said binder is an acrylate binder.

11. Construction panel according to one of claims 1 to 10, wherein said electrically conductive layers comprise printed patterns.

12. Construction panel according to one of claims 1 to 11, wherein said insulation layer (11,81,91) and/or said at least one active thermal layer (12,82,92) comprises bonding enhancers.

13. Construction panel according to one of claims 1 to 12, wherein said electrical heating and/or cooling element comprises a peltier element layer (91,93,94,95).

14. Construction panel according to one of claims 1 to 13, wherein said active thermal layer (12,82,92) comprises tubes for a cooling fluid arranged in grooves provided on a surface of said at least one insulation layer and a thermally conductive plate arranged on said grooves, the thermally conductive plate being in thermal contact with said tubes.

## Patentansprüche

1. Bauplatte (10,80,90) bestehend aus
mindestens eine Isolierschicht (11, 81, 91), wobei die mindestens eine Isolierschicht ein elektrisch isolierendes Blatt, Gewebe oder Papier umfasst,
mindestens eine aktive thermische Schicht (12, 82, 92), die unter Verwendung von Drucktechniken hergestellt wird, wobei die aktive thermische Schicht mindestens ein elektrisches Heiz- und/oder ein elektrisches Kühlelement umfasst, wobei das elektrische Heiz- und/oder Kühlelement eine oder mehrere elektrisch leitende Schichten umfasst, wobei die elektrisch leitenden Schichten eine oder mehrere Schichten aus Graphit umfassen, die in einem Bindemittel dispergiert sind, das 30 bis 86 Gew.-% Graphit und 4 bis 30 Gew.-% Bindemittel und 10 bis 40 Gew.-% funktionelle Additive umfasst, wobei die funktionellen Additive 10 Gew.-% Kohlenstoffnanoröhren umfassen; und
Verbindungsmittel (16) zum Verbinden der mindestens einen aktiven thermischen Schicht (12, 82, 92) mit einer elektrischen Stromquelle.

2. Bauplatte gemäß Anspruch 1, wobei die mindestens eine Isolierschicht (11, 81, 91) einen Schaum, der aus einer schäumenden ersten Polyharnstoffzusammensetzung auf Silikatbasis hergestellt ist, die durch Umsetzen von Bestandteilen, die ein Polyisocyanat und ein wässriges Silikat umfassen, erhalten wird, und ein Stabilisierungsmaterial umfasst.

3. Bauplatte nach Anspruch 2, wobei das stabilisierende Material ein Harz umfasst, das aus einer nicht schäumenden zweiten Polyharnstoffzusammensetzung auf Silikatbasis erhalten wird, die durch Umsetzen von Bestandteilen, die ein Polyisocyanat und ein wässriges Silikat umfassen, erhalten wird, wobei der nicht schäumende zweite Polyharnstoff auf Silikatbasis eine höhere Konzentration des wässrigen Silikats aufweist als die schäumende erste Polyharnstoffzusammensetzung auf Silikatbasis.

4. Bauplatte gemäß Anspruch 1, wobei die mindestens eine Isolierschicht (11, 81, 91) einen Hartschaum aus einer Polystyrolzusammensetzung und einem Stabilisierungsmaterial umfasst.

5. Bauplatte gemäß einem der Ansprüche 1 bis 4, wobei das Stabilisierungsmaterial zweidimensionale oder dreidimensionale Gewebe aus Glas-, Kohlenstoff-, Basalt- und Aramidfasern umfasst.

6. Bauplatte gemäß einem der Ansprüche 1 bis 5, wobei die mindestens eine Dämmschicht (11, 81, 91) ein anorganisches Füllmaterial umfasst.

7. Bauplatte gemäß Anspruch 6, wobei das anorganische Füllmaterial aus einem oder mehreren Siliziumdioxidkügelchen, -granulat oder -fasern ausgewählt ist.

8. Bauplatte gemäß einem der Ansprüche 1 bis 7, wobei die elektrisch leitenden Schichten eine oder mehrere Schichten aus einem Metallblech oder Metallgitter umfassen.

9. Bauplatte gemäß einem der Ansprüche 1 bis 8, wobei die elektrisch leitenden Schichten eine oder mehrere Schichten aus einem zweidimensionalen Halbleiter umfassen.

10. Bauplatte gemäß einem der Ansprüche 1 bis 9, wobei das Bindemittel ein Acrylatbindemittel ist.

11. Bauplatte gemäß einem der Ansprüche 1 bis 10, wobei die elektrisch leitenden Schichten gedruckte Muster umfassen.

12. Bauplatte gemäß einem der Ansprüche 1 bis 11, wobei die Isolierschicht (11, 81, 91) und/oder die mindestens eine aktive thermische Schicht (12, 82, 92) Haftvermittler umfasst.

13. Bauplatte gemäß einem der Ansprüche 1 bis 12, wobei das elektrische Heiz- und/oder Kühlelement eine Peltierelementschicht (91, 93, 94, 95) umfasst.

14. Bauplatte gemäß einem der Ansprüche 1 bis 13, wobei die aktive Wärmeschicht (12, 82, 92) Rohre für ein Kühlfluid, die in Rillen auf einer Oberfläche der mindestens einen Isolierschicht angeordnet sind, und eine wärmeleitende Platte, die auf den Rillen angeordnet ist, umfasst, wobei die wärmeleitende Platte in Wärmekontakt mit den Rohren steht.

## Revendications

1. Panneau de construction (10,80,90), comprenant
au moins une couche d'isolation (11, 81, 91), ladite au moins une couche d'isolation comprenant une feuille, une bande ou un papier électriquement isolant(e),
au moins une couche thermique active (12, 82, 92) fabriquée en utilisant des techniques d'impression, ladite couche thermique active comprenant au moins un élément chauffant électrique et/ou un élément réfrigérant électrique, dans lequel ledit élément chauffant et/ou élément réfrigérant électrique comprend une ou plusieurs couches électriquement conductrices, lesdites couches électriquement conductrices comprenant une ou plusieurs couches de graphite dispersé dans un liant, comprenant de 30 à 86 % en poids de graphite et de 4 à 30 % en poids de liant et de 10 à 40 % en poids d'additifs fonctionnels, dans lequel lesdits additifs fonctionnels comprennent 10 % en poids de nanotubes de carbone ; et
des moyens de connexion (16) pour connecter ladite au moins une couche thermique active (12, 82, 92) à une source de courant électrique.

2. Panneau de construction selon la revendication 1, dans lequel ladite au moins une couche d'isolation (11, 81, 91) comprend une mousse réalisée à partir d'une première composition de polyurée à base de silice moussante obtenue en faisant réagir des ingrédients comprenant un polyisocyanate et un silicate aqueux, et un matériau stabilisant.

3. Panneau de construction selon la revendication 2, dans lequel ledit matériau stabilisant comprend une résine obtenue à partir d'une seconde composition de polyurée à base de silice non moussante obtenue en faisant réagir des ingrédients comprenant un polyisocyanate et un silicate aqueux, dans lequel ladite seconde polyurée à base de silice non moussante présente une concentration plus élevée dudit silicate aqueux que ladite première composition de polyurée à base de silice moussante.

4. Panneau de construction selon la revendication 1, dans lequel ladite au moins une couche d'isolation (11, 81, 91) comprend une mousse rigide réalisée à partir d'une composition de polystyrène et d'un matériau stabilisant.

5. Panneau de construction selon l'une quelconque des revendications 1 à 4, dans lequel ledit matériau stabilisant comprend des tissus bidimensionnels ou tridimensionnels en fibres de verre, de carbone, de basalte et d'aramide.

6. Panneau de construction selon l'une quelconque des revendications 1 à 5, dans lequel ladite au moins une couche d'isolation (11, 81, 91) comprend un matériau de charge inorganique.

7. Panneau de construction selon la revendication 6, dans lequel ledit matériau de charge inorganique est choisi parmi un ou plusieurs parmi des microsphères, des granules ou des fibres de dioxyde de silicium.

8. Panneau de construction selon l'une quelconque des revendications 1 à 7, dans lequel lesdites couches électriquement conductrices comprennent une ou plusieurs couches constituées d'une feuille métallique ou d'un treillis métallique.

9. Panneau de construction selon l'une quelconque des revendications 1 à 8, dans lequel lesdites couches électriquement conductrices comprennent une ou plusieurs couches constituées d'un semiconducteur bidimensionnel.

10. Panneau de construction selon l'une quelconque des revendications 1 à 9, dans lequel ledit liant est un liant acrylate.

11. Panneau de construction selon l'une quelconque des revendications 1 à 10, dans lequel lesdites couches électriquement conductrices comprennent des motifs imprimés.

12. Panneau de construction selon l'une quelconque des revendications 1 à 11, dans lequel ladite couche d'isolation (11, 81, 91) et/ou ladite au moins une couche thermique active (12, 82, 92) comprend des amplificateurs de liaison.

13. Panneau de construction selon l'une quelconque des revendications 1 à 12, dans lequel ledit élément chauffant et/ou élément réfrigérant électrique comprend une couche d'élément Peltier (91, 93, 94, 95).

14. Panneau de construction selon l'une quelconque des revendications 1 à 13, dans lequel ladite couche thermique active (12, 82, 92) comprend des tubes pour un fluide réfrigérant agencés dans des rainures prévues sur une surface de ladite au moins une couche d'isolation et une plaque thermiquement conductrice agencée sur lesdites rainures, la plaque thermiquement conductrice étant en contact thermique avec lesdits tubes.
